(19) Europäisches Patentamt
European Patent Office
Office européen des brevets

(11) EP 0 847 967 B1

(12) # FASCICULE DE BREVET EUROPEEN

(45) Date de publication et mention de la délivrance du brevet:
**21.11.2001 Bulletin 2001/47**

(21) Numéro de dépôt: **97402977.9**

(22) Date de dépôt: **09.12.1997**

(51) Int Cl.[7]: **C04B 22/06**, C04B 28/18, C04B 22/14, C09K 17/10 // (C04B28/18, 14:26, 22:06, 22:14), C04B103:14

(54) **Activateur de durcissement pour coulis d'injection, coulis d'injection comportant un tel activiteur, son utilisation**

Härtungsbeschleuniger, einen diesen beinhaltenden Injektionsschlamm und dessen Verwendung

Hardening accelerator, injection grout containing it and its use

(84) Etats contractants désignés:
**BE DE ES FR GB PT**

(30) Priorité: **10.12.1996 FR 9615149**

(43) Date de publication de la demande:
**17.06.1998 Bulletin 1998/25**

(73) Titulaire: **Spie Fondations**
**95863 Cergy Pontoise (FR)**

(72) Inventeur: **Devic-Bassaget, Lucien Boris**
**75009 Paris (FR)**

(74) Mandataire: **Derambure, Christian**
**Bouju Derambure Bugnion,**
**52, rue de Monceau**
**75008 Paris (FR)**

(56) Documents cités:
**EP-A- 0 178 213**
**EP-A- 0 434 274**
**EP-A- 0 545 827**
**EP-A- 0 597 735**
**EP-A- 0 779 256**
**FR-A- 2 436 758**
**FR-A- 2 437 432**
**FR-A- 2 719 053**
**GB-A- 2 279 979**

- **CHEMICAL ABSTRACTS, vol. 125, no. 2, 8 juillet 1996 Columbus, Ohio, US; abstract no. 17414, XP002058424 & JP 08 073 846 A (ASAHI DENKA KK) 19 mars 1996**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 847 967 B1

Printed by Jouve, 75001 PARIS (FR)

## Description

L'invention concerne un coulis d'injection pour l'étanchéification et/ou la consolidation des sols et masses poreux, des roches fissurées et des matériaux de construction altérés tels que maçonnerie, mortiers, béton, etc.

L'invention concerne plus particulièrement un coulis d'injection pour l'étanchéification et/ou la consolidation de sols et de matériaux de construction comprenant un activateur de durcissement.

L'invention concerne également un procédé de mise en oeuvre d'un tel coulis d'injection pour l'étanchement et/ou la consolidation de tels sols et masses poreux et matériaux de construction.

Enfin, l'invention concerne un procédé de traitement des sols pollués permettant de piéger en masse divers éléments polluants, les rendant inaccessibles aux eaux souterraines. Ces éléments peuvent être d'origine organique tels que les hydrocarbures, ou d'origine minérale, tels que notamment certains métaux lourds comme le plomb, le cadmium, le mercure, le césium, etc.

Il est connu d'utiliser pour étanchéifier et/ou consolider les sols et matériaux des compositions connues sous le nom de "coulis". Ces coulis peuvent être à base de ciment ou de silicate.

L'utilisation de coulis constitués d'eau et de fines particules de ciment à base de laitiers de haut fourneau, parfaitement défloculées, soit mécaniquement, soit par l'utilisation d'un adjuvant non polluant, présente comme principaux inconvénients un temps de rigidification trop long et une forte décantation à des rapports ciment/eau peu élevés, malgré de bonnes caractéristiques de pénétrabilité dans les sols fins. Ceci se traduit par des phénomènes de migration par gravité, car la rigidité n'intervient qu'au bout de plus de quinze heures et n'étanche que faiblement le sol, la décantation étant trop importante pour remplir convenablement les pores du sol.

Ce temps de gélification qui fait suite à l'état sensiblement liquide du coulis est lui-même suivi par la prise à proprement parler du coulis. La prise en elle-même commence généralement après un temps correspondant à deux ou trois fois le temps nécessaire pour que la gélification du coulis débute. La prise du coulis est suivie par le durcissement du coulis.

En outre, l'évolution de la règlementation en matière d'environnement a pour conséquence une diminution croissante de l'utilisation de matières polluantes affectant la qualité des eaux, telles que les coulis à base de silicates de soude et de réactifs minéraux et/ou organiques, dont la rigidification est basée sur la gélification de la silice.

Soumis à des phénomènes de synérèse, à savoir une auto-contraction de la silice non cristallisée, ce type de produit libère des matières pouvant provoquer la pollution des sols. Des exemples de coulis à base de silicate peuvent être trouvés dans les documents FR-A-2 571 734, FR-A-2 629 495, EP-A-0 487 414.

Le document EP 0 434 274 décrit un coulis d'injection contenant de la microsilice et qui présente une viscosité supérieure à 14 mPa.s après 45 minutes. Cette viscosité est trop élevée pour être mesurée après deux heures. Dans l'exemple (D), le coulis contient de l'hydroxyde de sodium mais la viscosité reste élevée.

Le document FR-2 437 432 décrit un mélange qui ne contient pas d'hydroxyde de sodium ou de potassium. La viscosité n'est pas décrite.

Le document GB 2 279 979 décrit un coulis qui ne contient pas d'hydroxyde de sodium et dont la viscosité reste supérieure à 30 mPa.s (figure 1). Il décrit que les coulis contenant de la soude caustique ou de l'aluminate de sodium présentent un mauvais comportement (page 2, paragraphes 2 et 3).

Le document EP 0 597 735 décrit un coulis contenant un silicate et de l'hydroxyde de sodium, sa viscosité reste supérieure à 20 mPa.s après 1 minute. L'hydroxyde de potassium n'est pas présent dans le coulis.

Aucun de ces documents ne permet d'obtenir une viscosité inférieure à 5 mPa.s pendant les premières heures d'injection.

Un premier objet de l'invention est donc de proposer un coulis pour l'étanchéification et/ou la consolidation de sols et de matériaux de construction, qui pallie les limites ou les inconvénients des produits connus de l'état de la technique.

En particulier, un objet de l'invention est de proposer un coulis contenant activateur de durcissement capable de faire contribuer à court terme dans les résistances une charge de carbonate de calcium ou de carbonate double de calcium et de magnésium, par réaction avec la silice résiduelle contenue dans un liant silico-alumineux ou silico-alumino-calcique.

Egalement, un objet de la présente invention est de proposer coulis contenant un activateur de durcissement ayant pour effet d'augmenter la rigidité de la suspension de particules de ciment de laitier, de façon différée dans le temps. Plus particulièrement un objet de la présente invention est de proposer un coulis contenant activateur de durcissement ayant pour effet une rigidité suffisamment faible pendant la durée de l'injection pour assurer une pénétrabilité optimale et une rigidité suffisamment forte en fin d'injection pour s'opposer aux forces de gravité et à la décantation.

Un autre objet de la présente invention est de proposer un coulis d'injection pour l'étanchéification et/ou la consolidation de matières poreuses fines, voire très fines, dont le durcissement est assuré par cristallisation de matières minérales provenant de l'industrie cimentière et de ses dérivés, parfaitement pérennes, non polluantes et sans synérèse, ayant de plus des temps de prise constants et réglables.

Un autre objet de la présente invention est de proposer un coulis d'injection qui présente comme avantage de rester dans la zone traitée, d'assurer une parfaite étanchéité et d'apporter de bonnes caractéristiques mécaniques, et ce, dès quelques jours.

A cet effet, l'invention propose tout d'abord un coulis d'injection pour l'étanchement et/ou la consolidation de sols et matériaux de construction, comprenant au moins un réactif minéral particulaire, au moins un réactif calcique, et au moins un activateur comprenant au moins un composé alcalin et éventuellement un composé alumineux, le coulis possédant une viscosité cinématique variant entre environ 1,5 et environ 50 mPa.s et d'environ 2 à environ 5 mPa.s pendant la durée d'injectabilité comprise entre environ 1 et environ 2 heures, caractérisé en ce qu'il comprend entre environ 2% et environ 5% en poids de soude, de préférence entre environ 3% et environ 4% en poids de soude par rapport au poids de matière sèche, ou entre environ 3% et environ 8% en poids de potasse, de préférence entre environ 4% et environ 6% en poids de potasse par rapport au poids de matière sèche, et en ce que le coulis est dépourvu de microsilice ou de silice.

L'invention propose encore un procédé d'étanchéification et/ou de consolidation de sols et de matériaux de construction, caractérisé en ce qu'il consiste à injecter un coulis d'injection conforme à l'invention.

Enfin, la présente invention concerne un procédé de traitement des sols pollués, caractérisé en ce qu'on utilise, pour piéger en masse les éléments polluants, un coulis conforme à la présente invention.

D'autres caractéristiques et avantages de la présente invention apparaîtront à la lecture de la description qui suit, faite en référence au dessin annexé dans lequel :

- la figure 1 est un graphe illustrant l'influence d'un coulis d'injection conforme à la présente invention sur l'évolution des résistances en compression simple.

Un coulis d'injection pour l'étanchéification et/ou la consolidation de sols et de matériaux de construction comprend tout d'abord une suspension aqueuse d'un réactif minéral particulaire.

Selon une première variante, le réactif minéral particulaire est de type silico-alumino-calcique.

Appartiennent à cette catégorie les ciments de laitier type CLK ou CHF.

Le ciment de laitier type CLK comprend plus de 50 % de laitier et plus de 10 % de clinker. Dans un mode de réalisation préféré, un ciment de type CLK utilisable comprend plus d'environ 80 % en poids de laitier, environ 16 % en poids de clinker et environ 4 % en poids de gypse, dont la composition chimique est comprise dans les limites suivantes :

$CaO$=40 à 50 % ; $SiO_2$=26 à 35 % ; $Al_2O_3$=9 à 15 %.

Un autre ciment utilisable est un ciment de type CHF à plus d'environ 70% en poids de laitier, environ 26% en poids de clinker et environ 3-4% en poids de gypse.

La finesse du ciment est importante : la surface spécifique Blaine peut être supérieure à 8.000 $cm^2/g$, soit un diamètre des plus gros grains de ciment de 12 µm, et pour traiter les terrains très fins, la surface spécifique Blaine doit être supérieure à 10.000 $cm^2/g$, soit un diamètre des plus gros grains de ciment de 10 µm. Certains traitements des suspensions peuvent amener à utiliser des granulométries inférieures à 5 ou 6 µm. Dans tous les cas, la granulométrie du ciment de laitier de clinker doit être inférieure à environ 120 µ m.

La proportion de réactif minéral particulaire dans le coulis d'injection est comprise de préférence entre environ 50 et environ 500 kg par $m^3$ de coulis, de préférence entre environ 25 kg et environ 200 kg par mètre cube de coulis.

Selon une autre variante, le réactif minéral particulaire est de type silico-alumineux.

On citera, à titre illustratif, les cendres volantes provenant des résidus industriels de la combustion des produits pétroliers ou végétaux, les céramiques cuites à haute température telles que briques, tuiles.

La proportion de réactif silico-alumineux dans les coulis d'injection peut atteindre environ 500 kg par mètre cube, de préférence est comprise entre environ 50 kg et environ 500 kg par mètre cube, de façon plus préférée entre environ 25 kg et environ 200 kg par mètre cube de coulis.

Selon une autre variante, le coulis comprend un mélange de réactif silico-alumineux et silico-alumino-calcique.

Un réactif calcique constituant une charge minérale est ajouté à la suspension. Le réactif calcique permet la réaction avec la silice résiduelle contenue dans le réactif minéral particulaire.

De plus, il contribue à régler les résistances en compression simple du coulis et les caractéristiques rhéologiques de la suspension.

Ce réactif peut consister en de fines particules de carbonate de calcium, sous forme de précipité, de calcite micronisée ou de suspension aqueuse de calcite ; ou de fines particules de carbonate double de calcium et de magnésium (dolomite). Ce réactif peut être utilisé isolément ou en combinaison. La proportion de réactif calcique dans le coulis peut varier d'environ 50 à environ 1000 $kg/m^3$, de préférence d'environ 100 à environ 500 $kg/m^3$, de façon encore plus préférée d'environ 100 à environ 300 $kg/m^3$.

Le coulis d'injection peut comprendre encore un agent superplastifiant et défloculant des particules en suspension dans l'eau, dans une proportion allant d'environ 1% à environ 4% en poids par rapport au poids de la matière

sèche de la suspension.

Dans le cadre de la présente invention, on entend par matière sèche le ciment et la ou les charges minérales.

Selon l'invention, le coulis comprend également un activateur de durcissement, comprenant de la soude et/ou de la potasse selon la revendication 1.

L'activateur de durcissement de l'invention comprend une quantité variant entre environ 2% et environ 5% en poids de soude $Na_2O$ par rapport au poids de matière sèche du coulis.

Avantageusement, l'activateur comprend une quantité de soude variant d'environ 3% à environ 4% en poids.

En variante, l'activateur de durcissement de l'invention comprend une quantité de potasse $K_2O$ variant entre environ 3% et environ 8% en poids par rapport au poids de matière sèche du coulis.

Avantageusement, l'activateur de l'invention comprend une quantité d'environ 4% à environ 6% en poids de potasse par rapport au poids de matière sèche du coulis.

Selon une autre forme de réalisation, l'activateur de l'invention comprend un mélange de soude $Na_2O$ et de potasse $K_2O$.

Selon une autre variante, en particulier lorsque le traitement demande une rigidité plus importante à court terme, l'activateur de l'invention comprend de plus de l'alumine soluble $Al_2O_3$.

De préférence, la quantité d'alumine est comprise entre environ 0,1% et environ 1% en poids, de préférence entre environ 0,25% et. environ 0,5% en poids d'alumine $Al_2O_3$, par rapport au poids du réactif minéral particulaire.

L'activateur de durcissement contenant de l'alumine peut être obtenu, à partir d'une solution mère de soude ou de potasse telle que décrite précédemment à laquelle est ajoutée un accélérateur de gélification alumineux.

L'accélérateur de gélification alumineux peut être obtenu selon plusieurs procédés.

Selon un premier procédé, l'accélérateur de gélification est obtenu à partir d'aluminate de soude anhydre $AlNaO_2$.

L'aluminate est alors introduit dans l'activateur de durcissement contenant les quantités de soude $Na_2O$ et/ou de potasse $K_2O$ indiquées dans ce qui précède.

Le dosage en aluminate de soude anhydre est à ramener entre environ 0,2% et environ 2% en poids, de préférence entre environ 0,5% et environ 1% en poids par rapport au poids de réactif minéral particulaire, selon sa nature.

Ainsi, entre environ 0,1% et environ 2%, de préférence entre environ 0,25% et environ 0,5% en poids d'alumine $Al_2O_3$ soluble par rapport au poids de réactif minéral particulaire sont finalement introduits dans l'activateur de durcissement.

Selon un deuxième procédé, l'accélérateur de gélification est obtenu à partir d'une solution de sulfate d'aluminium $Al_2(SO_4)_3$, $nH_2O$, de préférence à 8% en poids de $Al_2O_3$, introduite dans l'activateur de durcissement tel que décrit dans ce qui précède.

La solution étant acide, on neutralise par un excès de soude ou de potasse, suivant les réactions :

$$Al_2(SO_4)_3 + 4Na_2O \rightarrow 3Na_2SO_4 + (Al_20_3,Na_2O)$$

$$Al_2(SO_4)_3 + 4K_2O \rightarrow 3K_2SO_4 + (Al_20_3,K_2O)$$

La réactivité de cette formulation est augmentée par la présence des sulfates et le dosage en alumine peut alors être inférieur à celui indiqué ci-dessus.

De préférence, le dosage en sulfate d'aluminium, de préférence à 8% en poids de $Al_2O_3$, est compris entre environ 1% et environ 10% et préférentiellement entre environ 4% et environ 5% en poids par rapport au poids de réactif minéral particulaire.

Selon un troisième procédé, l'accélérateur de gélification est obtenu à partir d'une solution d'alun de potassium : sulfate double d'aluminium et de potassium, Al $K(SO_4)_2$, $nH_2O$. Dans ce cas, la neutralisation est réalisée de la même façon que ci-dessus, avec de la soude $Na_2O$ ou de la potasse $K_2O$, en une quantité deux fois moins importante en soude ou en potasse.

Ainsi, le dosage en alun de potassium est compris entre environ 1% et environ 20% en poids d'alun, de préférence entre environ 8% et environ 10% en poids, par rapport au poids de réactif minéral particulaire.

Selon une autre variante, l'accélérateur de gélification est obtenu à partir d'aluminium en solution dans de la soude ou de la potasse.

La proportion d'eau dans le coulis est comprise entre environ 100 et environ 1.000 litres d'eau par $m^3$ de coulis.

Le coulis d'injection comprend, après mise en solution dans l'eau, une quantité d'activateur de durcissement variant d'environ 25 à environ 200 $l/m^3$ de coulis, de préférence d'environ 50 à environ 100 $l/m^3$ de coulis.

Sur la figure 1, qui représente l'influence de l'activateur selon l'invention sur l'évolution des résistances de

compression simple d'un coulis en fonction du temps, la courbe en traits pointillés correspond à un coulis sans activateur de durcissement, alors que la courbe en traits pleins correspond à un coulis comprenant un activateur de durcissement comprenant 3% en poids de $Na_2O$ par rapport au poids de matière sèche du coulis.

Dans la description qui suit, les lettres S, C, A, $\bar{S}$ et H ont les significations suivantes :

$S=SiO_2$ ; $C=CaO$ ; $A=Al_2O_3$ ; $\bar{S}=SO_3$ ; $H=H_2O$

On décrit ci-après le mécanisme de prise d'un coulis de l'invention comportant un activateur sans ajout d'alumine.

Le mécanisme de rigidification du coulis d'injection selon l'invention fait appel à la formation de silicates de calcium hydratés appelés couramment "CSH".

En effet, l'ajout du durcisseur alcalin a un double effet sur la silice amorphe du liant silico-alumineux ou silico-alumino-calcique d'une part et sur le réactif calcique d'autre part.

Pour le liant, les réactions sont les suivantes :

La silice libre ou les silicates di- et tricalciques $C_2S$ et $C_3S$ du liant sont solubilisés par le réactif alcalin :

$$Si0_2 + Na_2O + nH_2O \rightarrow (SiO_3Na_2,nH_2O)$$

Silice amorphe + soude → silicate de sodium

et la mise en solution donne :

$$(SiO_3Na_2,nH_2O) \dashrightarrow H_2SiO_4^{2-} + 2Na^+ + n'H_2O$$

acide silicique

Pour le réactif calcique, les réactions peuvent s'écrire :

$$CaCO_3 \xrightarrow{\text{pH élevé}} Ca^{2+} + CO_3^{2-} \text{ (pH supérieur à 12)}$$

Ensuite, les deux éléments solubilisés sous forme d'ions $Ca^{2+}$ et l'acide silicique $H_2SiO_4^{2-}$ réagissent pour donner des silicates de calcium hydratés, suivant la réaction :

$$H_2SiO_4^{2-} + Ca^{2+} \rightarrow H_2CaSiO_4 \text{ ou CSH}$$

La mise en solution de la silice et du calcium n'est pas immédiate, permettant de différer la prise du coulis selon l'invention pendant quelques heures.

On décrit ci-après le mécanisme de prise d'un coulis de l'invention comportant un activateur de durcissement contenant de l'alumine.

Les réactions décrites ci-dessus sont toujours valables mais, dans ce cas, l'alumine apportée a pour effet supplémentaire d'intervenir sur les silicates de calcium du liant.

Le ciment de laitier est mis en solution dans l'eau. Le gypse ou l'anhydrite qu'il contient réagit avec les aluminates les plus solubles du ciment à savoir les aluminates tricalciques ou $C_3A$ pour former de l'ettringite dite primaire, peu soluble, formant une coquille imperméabilisant la surface du minéral.

La réaction s'écrit :

$$C_3A + 3(C\bar{S},nH) + (32\text{-}3n)H \rightarrow C_6A\bar{S}_3H_{32}$$

ou

$$C_3A + (C\bar{S},nH) + (12\text{-}n)H \rightarrow C_4A\bar{S}H_{12}$$

Ceci a pour effet de ralentir la prise et de maîtriser la granulométrie du ciment. Sous cette forme et sans activateur, le ciment fait prise en plus de 15 heures et doit décanter pour augmenter sa rigidité. Pour mémoire, un coulis dosé à 200 kg/m$^3$ a une décantation de 70% environ. L'activateur de durcissement selon l'invention permet à la suspension de ciment de retrouver en solution des aluminates, jusqu'alors précipités sous forme d'ettringite, en proportion suffisante pour réagir sur la fraction de clinker la plus soluble à court terme à savoir les silicates tricalciques ou $C_3S$ libérant de la chaux en s'hydratant selon la réaction :

$$C_3S + (h+3-x)\ H_2O \dashrightarrow C_xSH_y + (3-x)\ CH$$

tobermorite + chaux

Ensuite, les aluminates de l'activateur de durcissement selon l'invention vont se combiner, dans la phase aqueuse, avec la chaux libérée selon les réactions suivantes :

- lorsque l'activateur est obtenu selon le premier procédé décrit ci-dessus :

$$C + A \rightarrow CA$$

$$CA + 10H \rightarrow CAH_{10} \text{ hexagonal}$$

ou

$$4\ CA+21H \rightarrow C_4AH_{12} \text{ hexagonal}+3AH_3 \text{ (gibbsite)}$$

$$2\ CA+10\ H \rightarrow C_2AH_7+AH_3$$

Il apparaît alors dans la solution des amas floconneux microniques augmentant peu à peu la rigidité de la suspension.

- lorsque l'activateur est obtenu selon les deuxième et troisième procédés décrits ci-dessus : la présence d'ions sulfates permet la cristallisation, avec la chaux et l'alumine, d'ettringite :

$$A_2\bar{S}_3,nH_20 + H_2O \rightarrow 3\ A_{aq} + 2\bar{S}_{aq}$$

se combinant à la chaux pour donner $C_6A\bar{S}H_{32}$ et $C_4A\bar{S}H_{12}$.

Dans ce cas, le fluide véhiculant -l'eau- se charge en cristaux sous formes d'aiguillettes, armant la suspension en lui conférant une rigidité progressive.

Le coulis d'injection de l'invention permet de faire contribuer à court terme dans les résistances une charge de carbonate de calcium ou de carbonate double de calcium et de magnésium, par réaction avec la silice résiduelle contenue dans un liant silico-alumineux ou silico-alumino-calcique.

De plus, il augmente la rigidité de la suspension de particules du coulis, de façon différée dans le temps, en possédant une rigidité suffisamment faible pendant la durée de l'injection pour assurer une pénétrabilité optimale et une rigidité suffisamment élevée en fin d'injection pour s'opposer aux forces de gravité et à la sédimentation de la suspension.

L'activateur de durcissement de l'invention contenant de l'alumine est particulièrement utile dans le cas où des circulations d'eau sont présentes dans le terrain, occasionnant un gradient hydraulique. Dans ce cas, un accroissement plus important de la rigidité permet d'éviter le transport du coulis dans des horizons plus lointains, pouvant par ailleurs occasionner un risque de dilution du coulis.

Le coulis selon l'invention présente alors comme avantage de rester dans la zone traitée, d'assurer une parfaite étanchéité et d'apporter de bonnes caractéristiques mécaniques, et ce dès quelques jours. On note dès sept jours des résistances en compression simple au moins égales à 90% de celles lues à 28 jours.

Les coulis accélérés selon l'invention entrent dans une plage rhéologique de l'ordre de 1000 fois moindre que celle des mortiers et bétons et se rapprochent plutôt de celle de l'eau.

Les caractéristiques rhéologiques d'un fluide ou d'une suspension peuvent être déterminées à partir des paramètres suivants :

- la viscosité cinématique caractérise l'état de fluidité du matériau en mouvement. Soumis à un déplacement qui peut être une vitesse de rotation ou un gradient de vitesse, le matériau répond à ces sollicitations en créant des efforts de cisaillement.
- Le seuil d'écoulement (encore appelé seuil de rigidité ou seuil de liquidité) est la limite de contrainte jusqu'à laquelle le fluide a un comportement solide. Tant que le fluide n'est pas soumis à une certaine contrainte ou une certaine pression, il n'apparaît aucun déplacement. Cette contrainte maximale de solidité caractérise la stabilité d'une suspension : il n'y aura plus sédimentation des particules lorsque les contraintes dues à la chute des grains par leur poids seront inférieures à ce seuil d'écoulement.

Les coulis d'injection de l'invention possèdent une viscosité cinématique de l'ordre d'environ 1,5 à environ 50 mPa.s et de l'ordre d'environ 2 à environ 5 mPa.s pendant la durée pratique d'injectabilité qui est comprise entre environ 1 et environ 2 heures.

Ils possèdent de plus un seuil d'écoulement progressif du fait de l'accélérateur selon l'invention variant entre environ 0 et environ 1 Pascal pendant la même durée pratique d'injectabilité, jusqu'à environ 0 ou 3 Pa au moment de la rigidité où l'on note l'arrêt de la sédimentation et le non "décrochement" du coulis placé dans une éprouvette renversée.

L'invention concerne également un procédé d'étanchéification et/ou de consolidation de sols et de matériaux de construction caractérisé en ce qu'il consiste à injecter un coulis d'injection conforme à l'invention.

L'invention concerne encore un procédé de traitement des sols pollués, caractérisé en ce qu'on utilise, pour piéger en masse les éléments polluants, un coulis conforme à l'invention.

L'invention sera maintenant décrite à l'aide d'exemples donnés à titre indicatif et non limitatif.

EXEMPLE I

Pour étancher et consolider un sable fin, un coulis a été préparé de la manière suivante pour 1 $m^3$:

200 kg de ciment ultrafin de laitier au clinker avec 4% en poids de défloculant sont mélangés à 200 kg de carbonates de calcium et 50 litres d'activateur contenant 3% en poids de soude par rapport au poids de matière sèche. La durée pratique d'injectabilité est de 1 heure et le temps de gélification est de 5 heures. Le coulis est homogène et stable et la décantation finale à la prise est inférieure à 5% (1%).

EXEMPLE II

Dans cet exemple, on utilise le coulis accéléré préparé à l'exemple I ci-dessus auquel sont ajoutés 50 litres de la solution d'activateur de durcissement de l'exemple I ci-dessus, contenant de plus 12 kg de sulfate d'aluminium pré-dilué et neutralisé par de la soude.

La durée pratique d'injectabilité est de 45 minutes et le temps de gélification est de 3 heures. Le coulis est homogène et la décantation finale à une heure d'agitation est inférieure à 5%.

**Revendications**

1. Coulis d'injection pour l'étanchement et/ou la consolidation de sols et matériaux de construction, comprenant au moins un réactif minéral particulaire, au moins un réactif calcique, et au moins un activateur comprenant au moins un composé alcalin et éventuellement un composé alumineux, le coulis possédant une viscosité cinématique variant entre environ 1,5 et environ 50 mPa.s et d'environ 2 à environ 5 mPa.s pendant la durée d'injectabilité comprise entre environ 1 et environ 2 heures, **caractérisé en ce qu'**il comprend entre environ 2% et environ 5% en poids de soude, de préférence entre environ 3% et environ 4% en poids de soude par rapport au poids de matière sèche, ou entre environ 3% et environ 8% en poids de potasse, de préférence entre environ 4% et environ 6% en poids de potasse par rapport au poids de matière sèche, et **en ce que** le coulis est dépourvu de microsilice ou de silice.

2. Coulis d'injection selon la revendication 1 **caractérisé en ce que** l'activateur est obtenu à partir d'aluminium en solution dans de la soude ou de la potasse.

3. Coulis d'injection selon la revendication 1, **caractérisé en ce que** l'activateur contient de la soude $Na_2O$ et/ou de la potasse $K_2O$ en solution.

4. Coulis d'injection selon la revendication 3, **caractérisé en que** l'activateur est susceptible d'être obtenu à partir d'aluminate de soude anhydre $AlNaO_2$.

5. Coulis d'injection selon la revendication 3, **caractérisé en ce que** l'activateur est susceptible d'être obtenu à partir de sulfate d'aluminium $Al_2(SO_4)_3$, $nH_2O$.

6. Coulis d'injection selon la revendication 5, **caractérisé en ce que** l'activateur est susceptible d'être obtenu à partir de sulfate d'aluminium à 8% en poids d'alumine.

7. Coulis d'injection selon la revendication 4, **caractérisé en ce que** l'activateur est susceptible d'être obtenu à partir de sulfate double d'aluminium et de potassium.

8. Coulis d'injection selon l'une des revendications 1 à 7, **caractérisé en ce que** le réactif minéral particulaire est un produit silico-alumino-calcique, notamment un ciment de laitier de type CLK ou CHF.

9. Coulis d'injection selon la revendication 8, **caractérisé en ce que** le réactif minéral particulaire est un produit silico-alumineux, notamment des cendres volantes ou des céramiques.

10. Coulis d'injection selon l'une quelconque des revendications 1 à 9, **caractérisé en ce que** le réactif calcique comprend du carbonate de calcium, du carbonate double de calcium et de magnésium.

11. Coulis d'injection selon l'une quelconque des revendications 1 à 10, **caractérisé en ce qu'**il comprend entre environ 0,2% et environ 2% en poids d'aluminate de soude, de préférence entre environ 0,5% et environ 1% en poids par rapport au poids du réactif minéral particulaire.

12. Coulis d'injection selon l'une quelconque des revendications 1à 10, **caractérisé en ce qu'**il comprend entre environ 1% et environ 10% en poids, de préférence entre environ 4% et environ 5% en poids de sulfate d'aluminium par rapport au poids du réactif minéral particulaire.

13. Coulis d'injection selon l'une quelconque des revendications 1 à 10, **caractérisé en ce qu'**il comprend entre environ 1% et environ 20% en poids, de préférence entre environ 8% et environ 10% en poids d'alun de potassium par rapport au poids du réactif minéral particulaire.

14. Coulis d'injection selon l'une quelconque des revendications 1 à 13, **caractérisé en ce qu'**il comprend un agent superplastifiant et défloculant, en une quantité comprise entre environ 1% et environ 4% en poids par rapport au poids de matière sèche.

15. Coulis d'injection selon l'une quelconque des revendications 1 à 14, **caractérisé en ce qu'**il comprend d'environ 50 à 500 kilos de réactif minéral particulaire par mètre cube de coulis, de préférence d'environ 25 kg à environ 200 kg.

16. Coulis d'injection selon l'une quelconque des revendications 1 à 14, **caractérisé en ce qu'**il comprend d'environ 100 à environ 1000 litres d'eau par mètre cube de coulis.

17. Coulis d'injection selon l'une quelconque des revendications 1 à 18, **caractérisé en ce qu'**il comprend d'environ 50 à environ 1000 kilos de réactif calcique par mètre cube de coulis, de préférence d'environ 100 à environ 500kg/$m^3$ de coulis, de façon plus préférée d'environ 100 à environ 300kg/$m^3$ de coulis.

18. Coulis d'injection selon l'une quelconque des revendications 1 à 17, **caractérisé en ce qu'**il possède un seuil d'écoulement variant d'environ 2 à environ 3 Pa et d'environ 0 à environ 1 Pa pendant la durée d'injectabilité comprise entre environ 1 et environ 2 heures.

**19.** Procédé d'étanchement et/ou de consolidation de sols et de matériaux de construction, **caractérisé en ce qu'**il comprend l'étape consistant à injecter un coulis d'injection selon l'une quelconque des revendications 1 à 18.

**20.** Procédé de traitement des sols pollués, **caractérisé en ce qu'**il comprend l'étape de piéger en masse les éléments polluants en injectant un coulis d'injection selon l'une quelconque des revendications 1 à 18.

**Patentansprüche**

**1.** Einspritzmasse für die Abdichtung und/oder die Konsolidierung von Böden und Baumaterialien, mit mindestens einem mineralen Partikel-Reagens, mindestens einem Kalzium-Reagens und mindestens einem Aktivator mit mindestens einer Alkali-Verbindung und eventuell einer Tonerde-Verbindung, wobei die Masse während der etwa 1 bis etwa 2 Stunden dauernden Spritzfähigkeitszeit eine zwischen etwa 1,5 und etwa 50 mPa.s und etwa 2 bis etwa 5 mPa.s schwankende kinematische Viskosität aufweist, **dadurch gekennzeichnet, dass** sie zwischen etwa 2 Gew.-% und etwa 5 Gew.-% Ätznatron enthält, vorzugsweise zwischen etwa 3 Gew.-% und etwa 4 Gew.-% Ätznatron in Bezug auf das Gewicht des Trockenstoffes, oder zwischen etwa 3 Gew.-% und etwa 8 Gew.-% Kali, vorzugsweise zwischen etwa 4 Gew.-% und etwa 6 Gew.-% Kali in Bezug auf das Gewicht des Trockenstoffes, und dass die Masse keine Mikro-Kieselerde oder Kieselerde enthält.

**2.** Einspritzmasse nach Anspruch 1, **dadurch gekennzeichnet, dass** der Aktivator ab in Ätznatron oder Kali in Lösung befindlichem Aluminium erhalten wird.

**3.** Einspritzmasse nach Anspruch 1, **dadurch gekennzeichnet, dass** der Aktivator Ätznatron $Na_2O$ und/oder Kali $K_2O$ in Lösung enthält.

**4.** Einspritzmasse nach Anspruch 3, **dadurch gekennzeichnet, dass** der Aktivator ab wasserfreiem Ätznatron-Aluminat $AlNaO_2$ erhalten werden kann.

**5.** Einspritzmasse nach Anspruch 3, **dadurch gekennzeichnet, dass** der Aktivator ab Aluminium-Sulfat $Al_2(SO_4)_3$, $nH_2O$ erhalten werden kann.

**6.** Einspritzmasse nach Anspruch 5, **dadurch gekennzeichnet, dass** der Aktivator ab Aluminium-Sulfat mit 8 Gew.-% Tonerde erhalten werden kann.

**7.** Einspritzmasse nach Anspruch 4, **dadurch gekennzeichnet, dass** der Aktivator ab doppelten Aluminium- und Kali-Sulfat erhalten werden kann.

**8.** Einspritzmasse nach einem der Ansprüche 1 bis 7, **dadurch gekennzeichnet, dass** das minerale Partikelreagens ein Kalkaluminiumsilikat-Produkt ist, insbesondere ein Schlackenzement des Typs CLK oder CHF.

**9.** Einspritzmasse nach Anspruch 8, **dadurch gekennzeichnet, dass** das minerale Partikelreagens ein Aluminiumsilikat-Produkt ist, insbesondere Flugasche oder Keramik.

**10.** Einspritzmasse nach einem der Ansprüche 1 bis 9, **dadurch gekennzeichnet, dass** das Kalzium-Reagens Kalzium-Karbonat, doppeltes Kalzium- und Magnesium-Karbonat enthält.

**11.** Einspritzmasse nach einem der Ansprüche 1 bis 10, **dadurch gekennzeichnet, dass** sie zwischen etwa 0,2 Gew.-% und etwa 2 Gew.-% Ätznatron-Aluminat, vorzugsweise zwischen etwa 0,5 Gew.-% und etwa 1 Gew.-%, in Bezug auf das Gewicht des mineralen Partikel-Reagens enthält.

**12.** Einspritzmasse nach einem der Ansprüche 1 bis 10, **dadurch gekennzeichnet, dass** sie zwischen etwa 1 Gew.-% und etwa 10 Gew.-%, vorzugsweise zwischen etwa 4 Gew.-% und etwa 5 Gew.-% Aluminium-Sulfat in Bezug auf das minerale Partikel-Reagens enthält.

**13.** Einspritzmasse nach einem der Ansprüche 1 bis 10, **dadurch gekennzeichnet, dass** sie zwischen etwa 1 Gew.-% und etwa 20 Gew.-%, vorzugsweise zwischen etwa 8 Gew.-% und etwa 10 Gew.-% Kalialaun in Bezug auf das Gewicht des mineralen Partikel-Reagens enthält.

**14.** Einspritzmasse nach einem der Ansprüche 1 bis 13, **dadurch gekennzeichnet, dass** sie ein Superplastifizierungs- und Entflockungsmittel in einer Menge zwischen etwa 1 Gew.-% und etwa 4 Gew.-% in Bezug auf das Gewicht des Trockenstoffes enthält.

**15.** Einspritzmasse nach einem der Ansprüche 1 bis 14, **dadurch gekennzeichnet, dass** sie etwa 50 bis 500 Kilo minerales Partikel-Reagens pro Kubikmeter Masse enthält, vorzugsweise etwa 25 kg bis etwa 200 kg.

**16.** Einspritzmasse nach einem der Ansprüche 1 bis 14, **dadurch gekennzeichnet, dass** sie etwa 100 bis etwa 1000 Liter Wasser pro Kubikmeter Masse enthält.

**17.** Einspritzmasse nach einem der Ansprüche 1 bis 16, **dadurch gekennzeichnet, dass** sie etwa 50 bis etwa 100 Kilo Kalzium-Reagens pro Kubikmeter Masse enthält, vorzugsweise etwa 100 bis etwa 500 kg/$m^3$ Masse, am besten etwa 100 bis etwa 300 kg/$m^3$ Masse.

**18.** Einspritzmasse nach einem der Ansprüche 1 bis 17, **dadurch gekennzeichnet, dass** sie während der zwischen etwa 1 und etwa 2 Stunden dauernden Spritzfähigkeitszeit einen zwischen etwa 2 bis etwa 3 Pa und etwa 0 bis etwa 1 Pa schwankenden Fliessgrenzwert aufweist.

**19.** Abdichtungs- und/oder Konsolidierungsverfahren von Böden und Baumaterialien, **dadurch gekennzeichnet, dass** es eine Einspritzetappe einer Einspritzmasse nach einem der Ansprüche 1 bis 18 umfasst.

**20.** Behandlungsverfahren verschmutzter Böden, **dadurch gekennzeichnet, dass** es eine Einschlussetappe in Masse der verschmutzenden Elemente durch Einspritzen einer Einspritzmasse nach einem der Ansprüche 1 bis 18 umfasst.

## Claims

**1.** An injection grout for sealing and/or consolidating soils and building material, comprising at least one particulate mineral reagent, at least one calcic reagent, and at least one activator comprising at least one alkaline compound and optionally an aluminous compound, the grout having a kinematic viscosity varying between around 1.5 and around 50 mPa.s and from around 2 to around 5 mPa.s during the injectability period between around 1 and around 2 hours, **characterised in that** it comprises between around 2% and around 5% by weight of soda, preferably between around 3% and around 4% by weight of soda with respect to the weight of dry matter, or between around 3% and around 8% by weight of potash, preferably between around 4% and around 6% by weight of potash with respect to the weight of dry matter, and **in that** the grout is devoid of microsilica or silica.

**2.** An injection grout according to Claim 1, **characterised in that** the activator is obtained from aluminium in solution in soda or potash.

**3.** An injection grout according to Claim 1, **characterised in that** the activator contains soda $Na_2O$ and/or potash $K_2O$ in solution.

**4.** An injection grout according to Claim 3, **characterised in that** the activator is capable of being obtained from anhydrous sodium aluminate $AlNaO_2$.

**5.** An injection grout according to Claim 3, **characterised in that** the activator is capable of being obtained from aluminium sulphate $Al_2(SO_4)_3,nH_2O$.

**6.** An injection grout according to Claim 5, **characterised in that** the activator is capable of being obtained from aluminium sulphate at 8% by weight of alumina.

**7.** An injection grout according to Claim 4, **characterised in that** the activator is capable of being obtained from double sulphate of aluminium and potassium.

**8.** An injection grout according to one of Claims 1 to 7, **characterised in that** the particulate mineral reagent is a calcium-alumino-silicate product, notably a slag cement of blast furnace or blast furnace Portland cement 85 type.

**9.** An injection grout according to Claim 8, **characterised in that** the particulate mineral reagent is an aluminosilicate product, notably fly ash or ceramics.

**10.** An injection grout according to any one of Claims 1 to 9, **characterised in that** the calcic reagent comprises calcium carbonate or double carbonate of calcium and magnesium.

**11.** An injection grout according to any one of Claims 1 to 10, **characterised in that** it comprises between around 0.2% and around 2% by weight of sodium aluminate, preferably between around 0.5% and around 1% by weight with respect to the weight of the particulate mineral reagent.

**12.** An injection grout according to any one of Claims 1 to 10, **characterised in that** it comprises between around 1% and around 10% by weight, preferably between around 4% and around 5% by weight of aluminium sulphate with respect to the weight of the particulate mineral reagent.

**13.** An injection grout according to any one of Claims 1 to 10, **characterised in that** it comprises between around 1% and around 20% by weight, preferably between around 8% and around 10% by weight of potassium alum with respect to the weight of the particulate mineral reagent.

**14.** An injection grout according to any one of Claims 1 to 13, **characterised in that** it comprises a superplasticizing and deflocculating agent, in a quantity between around 1% and around 4% by weight with respect to the weight of dry matter.

**15.** An injection grout according to any one of Claims 1 to 14, **characterised in that** it comprises from around 50 to 500 kilos of particulate mineral reagent per cubic metre of grout, preferably from around 25 kg to around 200 kg.

**16.** An injection grout according to any one of Claims 1 to 14, **characterised in that** it comprises from around 100 to around 1000 litres of water per cubic metre of grout.

**17.** An injection grout according to any one of Claims 1 to 16, **characterised in that** it comprises from around 50 to around 1000 kilos of calcic reagent per cubic metre of grout, preferably from around 100 to around 500 $kg/m^3$ of grout, more preferably from around 100 to around 300 $kg/m^3$ of grout.

**18.** An injection grout according to any one of Claims 1 to 17, **characterised in that** it has a yield point varying from around 2 to around 3 Pa and from around 0 to around 1 Pa during the injectability period between around 1 and around 2 hours.

**19.** A method of sealing and/or consolidating soils and building material, **characterised in that** it comprises the step consisting of injecting an injection grout according to any one of Claims 1 to 18.

**20.** A method of treating contaminated soils, **characterised in that** it comprises the step of trapping the contaminants *en masse* and injecting an injection grout according to any one of Claims 1 to 18.

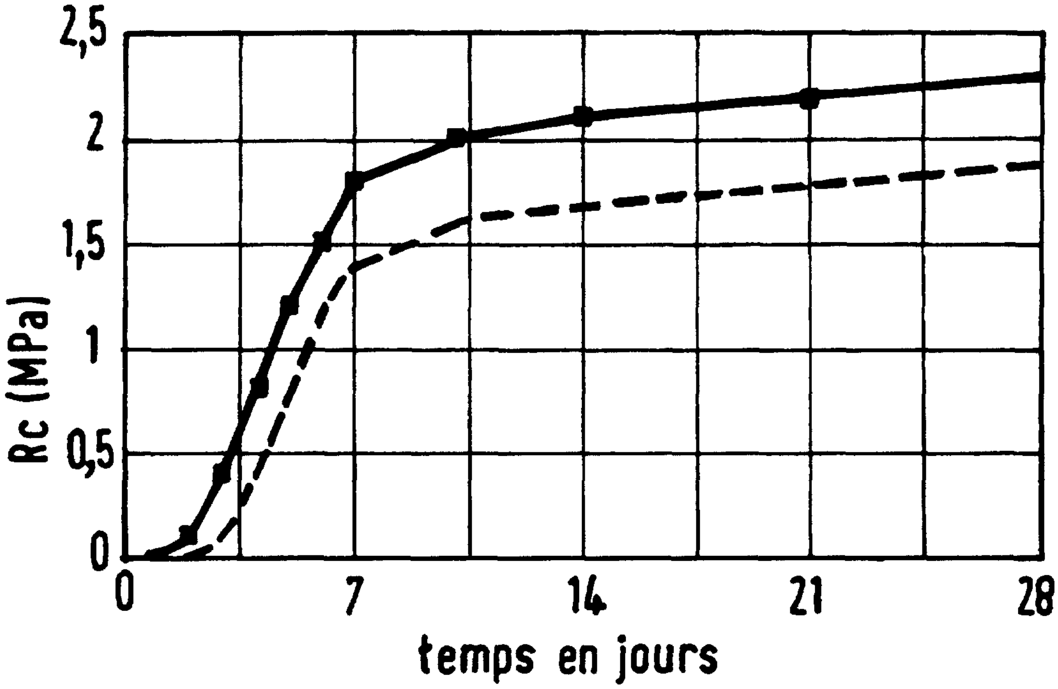
2,5
2
1,5
1
0,5
0
Rc (MPa)
0
7
14
21
28
temps en jours